# EUROPÄISCHE PATENTSCHRIFT

(11) **EP 1 120 384 B1**
(45) Veröffentlichungstag und Bekanntmachung des Hinweises auf die Patenterteilung: **03.07.2002**
(21) Anmeldenummer: 01100104.7
(22) Anmeldetag: 11.01.2001
(51) Int. Cl.: C04B 28/14, C04B 24/42, C04B 20/10

(54) **Hydrophobierungsmittel zur Hydrophobierung von gipsgebundenen Baustoffen**
Water repellant agent for hydrophobing building materials with gypsum binder
Agent hydrophobe pour rendre hydrophobe les matériaux de construction liés par du plâtre

(30) Priorität: 27.01.2000 DE 10003495
(43) Veröffentlichungstag der Anmeldung: 01.08.2001
(73) Patentinhaber: Wacker Polymer Systems GmbH & Co. KG, 84489 Burghausen (DE)
(72) Erfinder: Eck, Herbert, Dr., 83646 Bad Tölz (DE); Adler, Klaus, Dr., 84489 Burghausen (DE)
(74) Vertreter: Schuderer, Michael, Dr.

(56) Entgegenhaltungen:
- DE-A- 4 433 864
- DE-A- 19 734 255
- FR-A- 1 207 978
- FR-A- 1 525 367
- GB-A- 2 062 607
- US-A- 3 455 710
- US-A- 4 851 047
- DATABASE WPI Week 199844 Derwent Publications Ltd., London, GB; AN 1998-515001 XP002167427 & JP 10 226550 A (NIPPON OILS & FATS)

## Beschreibung

Die Erfindung betrifft ein Hydrophobierungsmittel für gipsgebundene Baustoffe, ein Verfahren zu dessen Herstellung sowie dessen Verwendung.

Gips ist ein in großen Mengen preiswert zur Verfügung stehender Baustoff. Neben dem Einsatz von Gips in Fugenmassen werden Gipsmörtel vor allem für Innenputze und Beschichtungen eingesetzt. Wegen ihrer Wasserempfindlichkeit werden aber Putze, die als Bindemittel Baugips enthalten, nur für Innenputze mit dafür üblicher Beanspruchung, aber nicht für Feuchträume oder für Außenputze eingesetzt. Um Bauwerkstoffe auf Gipsbasis auch für den Außenbereich und Naßbereich einsetzen zu können, müssen diese ausreichend hydrophobiert werden. Im Stand der Technik werden daher den Gipsmassen häufig Organosiliciumverbindung zu deren Hydrophobierung zugemischt.

Die DE-A 2740049 (GB-A 1581396) beschreibt ein Verfahren zur Herstellung eines wasserabweisenden Gipsproduktes, bei dem Gipspulver in Abwesenheit von Wasser mit einem linearen Monomethylpolysiloxan vermischt wird. Dieses Verfahren hat den Nachteil, dass der Bedarf von Monomethylpolysiloxan für die Hydrophobierung relativ hoch ist, und sich die Verarbeitungseigenschaften des so vorbehandelten Gipspulvers verschlechtern.

Aus der EP-A 171018 (US-A 4643771) ist bekannt, dass hydrophobierte Gipsformkörper durch Zusatz eines aus Alkylwasserstoffpolysiloxanen, Tensid und Wasser hergestellten Schaumes zum wässrigen Gipsbrei hergestellt werden können. Ein wesentlicher Nachteil dieses Verfahrens besteht darin, dass in der Praxis bei der Herstellung von Gipsplatten die Dosierung des angerührten Gipsbreies unter anderem durch Variation der zugesetzten Schaummenge reguliert wird. Das Endprodukt ist daher nicht gleichmäßig hydrophobiert.

Die DE-A 4128424 betrifft ein Verfahren zur Hydrophobierung von Gipsmassen, wobei das als Hydrophobierungsmittel eingesetzte Alkylwasserstoffpolysiloxan als Öl mit dem Anmachwasser intensiv vermischt wird, und anschließend das Gipspulver zugegeben wird. Aus der US-A 3455710 ist bekannt, als Hydrophobierungsmittel für Gips Alkylwasserstoffpolysiloxane in Form deren wässriger Emulsion dem Gips zuzusetzen. Die beiden letztgenannten Verfahren haben den Nachteil, dass der Verarbeiter das Hydrophobierungsmittel zumischen und damit auch dosieren muß. Schwankungen sind damit vorprogrammiert. Bei der Zumischung als wässrige Emulsion ist außerdem die relative starke Wasserstoffabspaltung und damit die Abnahme der Wirksamkeit des Polysiloxans zu berücksichtigen.

Eine deutliche Verbesserung bringt das in der DE-A 3704439 beschriebene Verfahren, bei dem das Hydrophobierungsmittel als pulverförmiges Produkt eingesetzt wird, welches durch Sprühtrocknung eines Gemisches aus Wasser, Alkylwasserstoffpolysiloxan und einem wasserlöslichen, filmbildenden Polymer mit definiertem Trübungspunkt, beispielsweise Polyvinylalkohol, als in Wasser redispergierbares Pulver erhalten wird. Dieses Pulver kann dann dem Gips zur Hydrophobierung zugegeben werden. Nachteilig sind die nicht unerheblichen Herstellkosten des Pulvers sowie dessen nicht befriedigende Lagerstabilität. Diese birgt aufgrund der möglichen Wasserstoffabspaltung die Gefahr einer Wassergas- oder Staubexplosion vor der Einmischung in das Gipspulver in sich.

Es bestand daher die Aufgabe ein Hydrophobierungsmittel für gipsgebundene Baustoffe zu entwickeln, welches eine gleichmäßige Einmischung des Hydrophobierungsmittels in den pulverförmigen Gips oder in die pulverförmige Gipsmischung möglich macht. Außerdem sollte das pulverförmige Hydrophobierungsmittel allein und auch in der gebrauchsfertigen Mischung eine gute Lagerstabilität und eine auf ein Minimum reduzierte Explosionsgefahr aufweisen.

Gegenstand der Erfindung ist ein Hydrophobierungsmittel für gipsgebundene Baustoffe bestehend aus einer Trägersubstanz auf der Basis von pulverförmigen, organischen oder anorganischen Feststoffen mit einer BET-Oberfläche von > 5 g/m² und einer oder mehreren Organopolysiloxanen mit Si-gebundenem Wasserstoff (Organowasserstoffpolysiloxane), die aus Einheiten der allgemeinen Formel HₐSiR¹_{b}O_{(4-a-b)/2} aufgebaut sind, in der die Reste R¹ gleiche oder verschiedene, einwertige Kohlenwasserstoff- oder Kohlenwasserstoffoxy-Reste mit ein bis 15 C-Atomen, oder Hydroxylgruppen sind, mit der Maßgabe, dass pro Molekül mindestens ein Si-gebundenes Wasserstoffatom vorhanden ist, und a Werte von 0 bis 3, und b Werte von 0 bis 3 bedeutet.

Geeignete Trägermaterialien aus der Gruppe der anorganischen Trägersubstanzen sind Siliciumdioxid wie Kieselgel oder Kieselsäure, Aluminiumoxid, Titandioxid, Silikate und Tone. Bevorzugt werden Kieselsäure und Aluminiumoxid, besonders bevorzugt durch naßchemische Fällung oder pyrogen durch Flammenhydrolyse hergestellte Kieselsäure und Aluminiumoxid. Geeignete Trägermaterialien aus der Gruppe der organischen Trägersubstanzen sind Stärkepulver, Cellulosepulver und Polymerpulver. Bevorzugt werden Polyvinylchlorid-, insbesondere Suspensions-PVC, Polystyrol-, Polyamid- und Polyvinylpyrrolidon-Pulver. Am meisten bevorzugt werden durch naßchemische Fällung hergestellte Kieselsäure und Aluminiumoxid.

Bevorzugt werden auch pulverförmige, anorganische oder organische Trägermaterialien mit einer BET-Oberfläche von 20 m²/g bis 400 m²/g, gemessen nach der BET-Methode gemäß DIN 66131 und DIN 66132). Besonders bevorzugt sind Trägermaterialien, welche eine Wasserstoffabspaltung bei den Organowasserstoffpolysiloxanen nicht begünstigen; das sind solche mit einer neutralen bis schwach sauren Oberfläche, das ist insbesondere ein pH-Wert von pH 5.5 bis 7.0 (5 Gew.-%-ige Suspension in Wasser). Besonders bevorzugt sind auch Trägermaterialien mit guten Adsorptionseigenschaften, das heißt einer Flüssigkeitsaufnahme von > 10 Gew.-%, bezogen auf das Gewicht der Trägersubstanz.

Beispiele für Kohlenwasserstoffreste mit 1 bis 15 C-Atomen als Rest R¹ sind Alkylreste wie der Methyl-, Ethyl-, n-Propyl-, iso-Propyl-, n-Butyl-, iso-Butyl-, tert-Butyl-, n-Pentyl-, iso-Pentyl-, tert-Pentyl-,n-Hexyl-, n-Heptyl-, n-Octyl-, iso-Octyl- oder 2,2,4-Trimethylpentyl-, n-Nonyl-, n-Decyl-, n-Dodecyl-Rest; Alkenylreste wie Vinyl- und Allyl-Rest; Cycloalkylreste wie Cyclopentyl-, Cyclohexyl-, Cycloheptyl- und Methylcyclohexyl-Rest; Arylreste wie der Phenyl-, Naphthyl-, Anthryl- und Phenantryl-Rest; Alkarylreste wie der o-, m-, p-Tolyl-Rest, Xylylreste und Ethylphenylreste; Aralkylreste wie der Benzylrest und der alpha- und beta-Phenylethylrest. Die Kohlenwasserstoffreste mit 1 bis 15 C-Atomen können gegebenenfalls auch halogensubstituiert sein. Beispiele hierfür sind mit Fluor, Chlor, Brom oder Jod substituierte Alkylreste wie der 3,3,3-Trifluor-n-propylrest, der 2,2,2,2',2',2'-Hexafluorisopropylrest, der Heptafluorisopropylrest, und Halogenarylreste wie der o-, m- und p-Chlorphenylrest. Beispiele für Kohlenwasserstoffoxy-Reste sind die vorstehend genannten C₁- bis C₁₅-Kohlenwasserstoffreste, welche über ein zweiwertiges Sauerstoffatom an das Siliciumatom gebunden sind.

Besonders bevorzugte Reste R¹ sind die unsubstituierten C₁- bis C₆-Alkylreste, insbesondere der Methylrest, und der Phenylrest. In einer weiteren bevorzugten Ausführungsform sind höchstens 5 Mol-%, besonders bevorzugt keiner der Reste R¹, Kohlenwasserstoffoxy-Reste oder Hydroxylgruppen. Vorzugsweise beträgt a von 0.01 bis 2, insbesondere von 0.1 bis 1, und b beträgt vorzugsweise von 1.0 bis 2.0, insbesondere von 1.0 bis 1.8. Die durchschnittliche Viskosität der Organowasserstoffpolysiloxane beträgt höchstens 1000 mm²/s, vorzugsweise 5 bis 1000 mm²/s, insbesondere 5 bis 100 mm²/s, jeweils bei 25°C.

Am meisten bevorzugt werden Organowasserstoffpolysiloxane der allgemeinen Formel (CH₃)₃SiO(SiHCH₃O)_{y}(Si(CH₃)₂O)ₓSi(CH₃)₃, worin x Null oder eine ganze Zahl ist und y eine ganze Zahl von mindestens 3 ist, und y mindestens das dreifache, vorzugsweise mindestens das 13-fache von x ist, und die Summe von x und y eine ganze Zahl mit einem solchen Betrag ist, dass die durchschnittliche Viskosität dieser Organowasserstoffpolysiloxane höchstens 1000 mm²/s, insbesondere 5 bis 100 mm²/s, jeweils bei 25°C, beträgt.

Im allgemeinen enthält das Hydrophobierungsmittel 20 bis 75 Gew.-% Organowasserstoffpolysiloxane, bezogen auf das Gesamtgewicht von Trägersubstanz und Organowasserstoffpolysiloxan.

Zur Herstellung des Hydrophobierungsmittels werden die Organowasserstoffpolysiloxane als Flüssigkeit, vorzugsweise ohne Zusatz von Lösungsmittel, eingesetzt. Im allgemeinen wird die Trägersubstanz vorgelegt, das flüssige Organowasserstoffpolysiloxan zudosiert und zum Aufbringen auf die Trägersubstanz mit der Trägersubstanz vermischt. Das Aufbringen der Organowasserstoffpolysiloxane auf die Trägersubstanzen erfolgt im allgemeinen bei Raumtemperatur und kann in den herkömmlichen, zur Pulvermischung geeigneten Geräten erfolgen. Beispielhaft genannt seien kontinuierlich und diskontinuierlich arbeitende Schneckenbandmischer, Doppelspiralmischer, Schaufelmischer, Pflugscharmischer, schnell- und langsamlaufende Paddelmischer, Wirbelschneckenmischer, Trogmischer. Auch Mischer mit rotierenden Mischbehältern sind brauchbar, beispielsweise Rhönradmischer, Taumelmischer, Doppelkonusmischer und V-Mischer. Das Aufbringen der Organowasserstoffpolysiloxane auf die Trägersubstanzen kann auch mittels Aufsprühen der flüssigen Organowasserstoffpolysiloxane auf die pulverförmigen Trägersubstanzen erfolgen.

Das Hydrophobierungsmittel eignet sich zur Hydrophobierung aller Arten von Gips. Unter den Gipsarten sind alpha- und beta-Halbhydrat (CaSO₄^{·}1/2H₂O) in Form von beispielsweise Baugips, Stuckgips oder Modellgips bevorzugt. Weitere gebräuchliche Gipsarten sind Estrichgips, Marmorgips und Anhydrit, sowie das bei der Rauchgasentschwefelung anfallende Calciumsulfat (REHA-Gips).

Die Gipszusammensetzung kann weiter die üblichen Zuschläge und Zusatzstoffe enthalten. Übliche Zuschläge für Gipsmörtel sind Kalkhydrat zu vorzugsweise 1 bis 30 Gew.-% sowie inerte Füllstoffe wie Calciumcarbonat, Dolomit, Leichtspat und/oder Quarzsand in üblichen Mengen, vorzugsweise zu 5 bis 80 Gew%. Die Angaben in Gew.-% beziehen sich jeweils auf das Gesamtgewicht der pulverförmigen Gipszusammensetzung. Zusätze, die die Verarbeitbarkeit der Gipszusammensetzung bzw. die Eigenschaften damit gefertigter Produkte verbessern, sind beispielsweise Salze langkettiger Fettsäuren wie Ca-Stearat und Na-Oleat, Siliconbautenschutzmittel, Fungizide, Faserstoffe wie Cellulosefasern, Beschleuniger wie Di-Kaliumhydrogensulfat und Aluminiumsulfat, Verzögerer wie Eiweiße und Tartrate, Plastifizierungsmittel wie Ligninsulfate, Haftvermittler wie Stärke, oder Bindemittel wie in Wasser redispergierbare Kunststoffpulver.

Zur Hydrophobierung des Gipses wird das Hydrophobierungsmittel in geeigneten Mischern, beispielsweise den oben genannten für Pulvermischungen geeigneten Mischaggregaten, mit dem Gips vermischt. Es kann auch so vorgegangen werden, dass das Hydrophobierungsmittel mit den Zusatzstoffen zur Modifizierung von Gipszusammensetzungen vermischt wird und anschließend dem Gips zugegeben wird. Beispielsweise kann das Hydrophobierungsmittel während der Sprühtrocknung von wässrigen Kunststoffdispersionen, zur Herstellung von in Wasser redispergierbaren Kunststoffpulvern, zugegeben werden. Ein bevorzugtes Verfahren ist dabei die Zugabe des Hydrophobierungsmittel zum getrockneten Kunststoffpulver durch kontinuierliche Zudosierung des Hydrophobierungsmittels in den Sprühtrockner, gegebenenfalls mit anderen Zusatzstoffen wie Antiblockmittel und Entschäumer.

Das Hydrophobierungsmittel wird in einer solchen Menge der Gipszusammensetzung zugegeben, dass 0.05 bis 5 Gew.-Teile, vorzugsweise 0.2 bis 2 Gew.-Teile Organowasserstoffpolysiloxan bezogen auf 100 Gew.-Teile Gips in der hydrophobierten Gipszusammensetzung vorliegen.

Die erfindungsgemäß hydrophobierten Gipszusammensetzungen eignen sich vor allem für die Verwendung als Gipsmörtel für Spachtelmassen, Joint-Filler, Fließestriche, Fugenmassen und Klebemörtel. Weitere Anwendungen sind beispielsweise Putze oder Stukkaturen speziell im Außenbereich. Weitere Verwendungen sind beispielsweise die zur Herstellung von Gipsplatten oder Gipsformen.

Die nachfolgenden Beispiele dienen zur weiteren Erläuterung der Erfindung:

### Allgemeine Vorschrift zur Herstellung des Hydrophobierungsmittels:

In einem Doppelspiralmischer wurden 150 g Trägersubstanz vorgelegt und 150 g Organowasserstoffpolysiloxan innerhalb von 30 Minuten bei Raumtemperatur zugetropft. Nach 10 Minuten Nachrühren wurde die pulverförmige Zusammensetzung abgefüllt. Es wurden die nachfolgenden Zusammensetzungen 1 und 2 hergestellt.

### Zusammensetzung 1:

Als Trägermaterial diente ein Kieselsäurepulver (Sipernat 22) mit einer BET-Oberfläche von 190 m²/g und einem pH-Wert von 6.3 (5 %-ige Suspension) auf welches ein mit Trimethylsiloxygruppen endblockiertes Methylhydrogenpolysiloxan mit einer Viskosität von 20 mm²/s (25°C) aufgetragen wurde.

### Zusammensetzung 2:

Als Trägermaterial diente ein Kieselsäurepulver (FK 320) mit einer BET-Oberfläche von 170 m²/g und einem pH-Wert von 6.3 (5 %-ige Suspension)auf welches ein mit Trimethylsiloxygruppen endblockiertes Methylhydrogenpolysiloxan mit einer Viskosität von 20 mm²/s (25°C) aufgetragen wurde.

Die Hydrophobierung wurde in folgender Gipsmörtelrezeptur getestet:

| | | |
|---|---|---|
| 800 | Gewichtsteile | Gips (Alabaster-Modellgips) |
| 158.2 | " | CaCO₃ (Durcal 65) |
| 30 | " | Dispersionspulver (Vinnapas LL 5100) |
| 1.0 | " | Celluloseether (Culminal C 8031) |
| 0.5 | " | Stärkeether (Amylotex Plus) |
| 10.0 | " | Leichtspat |
| 0.3 | " | Verzögerer (Retardan-P) |
| 520 | " | Wasser |

### Beispiel 1:

Der Gipsmörtel wurde mit 0.5 Gew.-Teilen von Zusammensetzung 1 hydrophobiert.

### Beispiel 2:

Der Gipsmörtel wurde mit 0.5 Gew.-Teilen von Zusammensetzung 2 hydrophobiert.

### Vergleichsbeispiel 1:

Der Gipsmörtel wurde nicht hydrophobiert.

### Vergleichsbeispiel 2 (analog DE-A 4128424):

Zur Hydrophobierung des Gipsmörtels wurden 0.25 Gew.-Teile des mit Trimethylsiloxygruppen endblockierten Methylhydrogenpolysiloxan mit einer Viskosität von 20 mm²/s (25°C) in das Anmachwasser gegeben.

### Vergleichsbeispiel 3 (analog US-A 3455710):

Zur Hydrophobierung des Gipsmörtels wurden 0.5 Gew.-Teile einer 50 %-igen wässrigen Emulsion des mit Trimethylsiloxygrupper. endblockierten Methylhydrogenpolysiloxan mit einer Viskosität von 20 mm²/s (25°C) zugegeben.

### Testung der Hydrophobizität:

Zur Testung der Wasseraufnahme wurde der Gipsmörtel in einer Schichtdicke von 10 mm auf eine Betonplatte aufgetragen und getrocknet. Auf die getrocknete Schicht wurde ein Prüfröhrchen nach D. Karsten aufgesetzt, welches aus einer Glocke (innerer Durchmesser 20 mm, Höhe 25 mm, Prüffläche 3 cm²) und einem angesetzten kalibrierten Glasrohr von 10 cm Länge mit Volumeneinteilung bestand. Das Prüfröhrchen wurde auf die Prüffläche aufgekittet, mit Wasser befüllt und an der Skala das Absinken (Eindringen) des Wassers gemessen. Die Meßergebnisse sind in Tabelle 1 zusammengefaßt:

Die Ergebnisse zeigen, dass durch Zugabe des Organowasserstoffpolysiloxans direkt in den Gipsmörtel eine nur sehr geringfügige Hydrophobierung erreicht wird (Vergleichsbeispiel 2: 5 ml Wasseraufnahme nach 25 min), wobei die Wasseraufnahme nur unwesentlich besser ist als die bei nicht hydrophobiertem Gipsmörtel (Vergleichsbeispiel 1: 5 ml Wasseraufnahme nach bereits 10 min).
Bei Hydrophobierung des Gipsmörtels mit einer wässrigen Emulsion des Organowasserstoffpolysiloxans erhält man bessere Hydrophobierung (Vergleichsbeispiel 3: 0.5 ml Wasseraufnahme nach 7 h).
Wird allerdings mit dem erfindungsgemäßen Hydrophobierungsmittel gearbeitet (Beispiele 1, 2) ist selbst nach 7 Stunden Einwirkungszeit des Wasser nur eine Wasseraufnahme von 0.1 ml meßbar. Die Hydrophobierung ist gegenüber der im Stand der Technik bekannten Vorgehensweise deutlich verbessert.

**Tabelle 1:**

| Wasseraufnahme [ml] | 10 min | 25 min | 1 h | 2 h | 3 h | 7 h |
|---|---|---|---|---|---|---|
| Beispiel 1 | 0 | 0 | 0.1 | 0.1 | 0.1 | 0.1 |
| Beispiel 2 | 0 | 0 | 0.1 | 0.1 | 0.1 | 0.1 |
| Vergleichsbeispiel 1 | > 5 | | | | | |
| Vergleichsbeispiel 2 | | > 5 | | | | |
| Vergleichsbeispiel 3 | 0 | 0 | 0.1 | 0.3 | 0.4 | 0.5 |

## Patentansprüche

1. Hydrophobierungsmittel für gipsgebundene Baustoffe bestehend aus einer Trägersubstanz auf der Basis von pulverförmigen, organischen oder anorganischen Feststoffen mit einer BET-Oberfläche von > 5 m²/g und einer oder mehreren Organopolysiloxanen mit Si-gebundenem Wasserstoff, die aus Einheiten der allgemeinen Formel HₐSiR¹_{b}O_{(4-a-b)/2} aufgebaut sind, in der die Reste R¹ gleiche oder verschiedene, einwertige Kohlenwasserstoff- oder Kohlenwasserstoffoxy-Reste mit ein bis 15 C-Atomen, oder Hydroxylgruppen sind, mit der Maßgabe, dass pro Molekül mindestens ein Si-gebundenes Wasserstoffatom vorhanden ist, und a Werte von 0 bis 3, und b Werte von 0 bis 3 bedeutet.

2. Hydrophobierungsmittel nach Anspruch 1, **dadurch gekennzeichnet, dass** pulverförmige, anorganische oder organische Trägermaterialien mit einer BET-Oberfläche von 20 m²/g bis 400 m²/g enthalten sind.

3. Hydrophobierungsmittel nach Anspruch 1 oder 2, **dadurch gekennzeichnet, dass** Trägermaterialien mit einer neutralen bis schwach sauren Oberfläche enthalten sind.

4. Hydrophobierungsmittel nach Anspruch 1 bis 3, **dadurch gekennzeichnet, dass** als Trägersubstanzen Siliciumdioxid, Aluminiumoxid, Titandioxid, Silikate oder Tone enthalten sind.

5. Hydrophobierungsmittel nach Anspruch 1 bis 3, **dadurch gekennzeichnet, dass** als Trägersubstanzen Stärkepulver, Cellulosepulver oder Polymerpulver enthalten sind.

6. Hydrophobierungsmittel nach Anspruch 1 bis 5, **dadurch gekennzeichnet, dass** als Reste R¹ unsubstituierte C₁- bis C₆-Alkylreste und/oder Phenylreste enthalten sind.

7. Hydrophobierungsmittel nach Anspruch 1 bis 6, **dadurch gekennzeichnet, dass** a von 0.01 bis 2 und b von 1.0 bis 2.0 beträgt.

8. Hydrophobierungsmittel nach Anspruch 1 bis 7, **dadurch gekennzeichnet, dass** höchstens 5 Mol-% der Reste R¹ Kohlenwasserstoffoxy-Reste oder Hydroxylgruppen sind.

9. Hydrophobierungsmittel nach Anspruch 1 bis 8, **dadurch gekennzeichnet, dass** ein oder mehrere Organowasserstoffpolysiloxane enthalten sind mit der allgemeinen Formel (CH₃)₃SiO(SiHCH₃O)_{y}(Si(CH₃)₂O)ₓSi(CH₃)₃, worin x Null oder eine ganze Zahl ist und y eine ganze Zahl von mindestens 3 ist, und y mindestens das dreifache von x ist, und die Summe von x und y eine ganze Zahl mit einem solchen Betrag ist, dass die durchschnittliche Viskosität dieser Organowasserstoffpolysiloxane höchstens 1000 mm²/s beträgt.

10. Hydrophobierungsmittel nach Anspruch 1 bis 9, **dadurch gekennzeichnet, dass** das Hydrophobierungsmittel 20 bis 75 Gew.-% Organowasserstoffpolysiloxane, bezogen auf das Gesamtgewicht von Trägersubstanz und Organowasserstoffpolysiloxan, enthält.

11. Verfahren zur Herstellung von Hydrophobierungsmitteln gemäß Anspruch 1 bis 10, wobei das Organowasserstoffpolysiloxan als Flüssigkeit eingesetzt wird, die Trägersubstanz vorgelegt wird, das flüssige Organowasserstoffpolysiloxan zudosiert und zum Aufbringen auf die Trägersubstanz mit der Trägersubstanz vermischt wird.

12. Verfahren zur Herstellung von Hydrophobierungsmitteln gemäß Anspruch 1 bis 10, wobei das Aufbringen der Organowasserstoffpolysiloxane auf die Trägersubstanzen mittels Aufsprühen der flüssigen Organowasserstoffpolysiloxane auf die pulverförmigen Trägersubstanzen erfolgt.

13. Verfahren zur Herstellung von Hydrophobierungsmitteln gemäß Anspruch 1 bis 10, wobei das Hydrophobierungsmittel während der Sprühtrocknung von wässrigen Kunststoffdispersionen, zur Herstellung von in Wasser redispergierbaren Kunststoffpulvern, zugegeben wird.

14. Verwendung der Hydrophobierungsmittel gemäß Anspruch 1 bis 10, wobei das Hydrophobierungsmittel in einer solchen Menge der Gipszusammensetzung zugegeben wird, dass 0.05 bis 5 Gew.-Teile Organowasserstoffpolysiloxan bezogen auf 100 Gew.-Teile Gips in der hydrophobierten Gipszusammensetzung vorliegen.

15. Verwendung der Hydrophobierungsmittel gemäß Anspruch 1 bis 10 in Gipsmörtel für Spachtelmassen, Joint-Filler, Fließestriche, Fugenmassen und Klebemörtel.

16. Verwendung der Hydrophobierungsmittel gemäß Anspruch 1 bis 10 in Putzen oder Stukkaturen.

17. Verwendung der Hydrophobierungsmittel gemäß Anspruch 1 bis 10 in Gipszusammensetzung zur Herstellung von Gipsplatten oder Gipsformen.

## Claims

1. Hydrophobicizing agent for gypsum-plaster-bound construction materials composed of a substrate based on pulverulent organic or inorganic solids with a BET surface area > 5 m²/g and composed of or more organopolysiloxanes having Si-bonded hydrogen and built up from units of the general formula HₐSiR¹_{b}O_{(4-a-b)/2}, where the radicals R¹ are identical or different monovalent hydrocarbon or hydrocarbonoxy radicals having from one to 15 carbon atoms, or are hydroxyl groups, with the proviso that at least one Si-bonded hydrogen atom per molecule is present, and a takes values from 0 to 3, and b takes values from 0 to 3.

2. Hydrophobicizing agent according to Claim 1, **characterized in that** pulverulent, inorganic or organic substrates with a BET surface area of from 20 to 400 m²/g are present.

3. Hydrophobicizing agent according to Claim 1 or 2, **characterized in that** substrates with a neutral to slightly acidic surface are present.

4. Hydrophobicizing agent according to Claims 1 to 3, **characterized in that** the substrates present comprise silicon dioxide, aluminium oxide, titanium dioxide, silicates or clays.

5. Hydrophobicizing agent according to Claims 1 to 3, **characterized in that** the substrates present comprise starch powders, cellulose powders or polymer powders.

6. Hydrophobicizing agent according to Claims 1 to 5, **characterized in that** the radicals R¹ present comprise unsubstituted C₁-C₆-alkyl radicals and/or phenyl radicals.

7. Hydrophobicizing agent according to claims 1 to 6, **characterized in that** a is from 0.01 to 2 and b is from 1.0 to 2.0.

8. Hydrophobicizing agent according to Claims 1 to 7, **characterized in that** not more than 5 mol% of the radicals R¹ are hydrocarbonoxy radicals or hydroxyl groups.

9. Hydrophobicizing agent according to Claims 1 to 8, **characterized in that** one or more organohydropolysiloxanes having the general formula (CH₃)₃SiO(SiHCH₃O)_{y}(Si(CH₃)₂O)ₓSi(CH₃)₃ are present, where x is zero or an integer and y is an integer not less than 3, and y is at least three times x, and the total of x and y is an integer such that the average viscosity of these organohydropolysiloxanes is not more than 1 000 mm²/s.

10. Hydrophobicizing agent according to Claims 1 to 9, **characterized in that** it comprises from 20 to 75% by weight of organohydropolysiloxanes, based on the total weight of substrate and organohydropolysiloxane.

11. Process for preparing hydrophobicizing agents according to Claims 1 to 10, where the organohydropolysiloxane is used as a liquid, the substrate forms an initial charge, and the liquid organohydropolysiloxane is metered in and is applied to the substrate by mixing with the substrate.

12. Process for preparing hydrophobicizing agents according to Claims 1 to 10, where the application of the organohydropolysiloxanes to the substrates takes place by spraying the liquid organohydropolysiloxanes onto the pulverulent substrates.

13. Process for preparing hydrophobicizing agents according to Claims 1 to 10, where the hydrophobicizing agent is added during the spray drying of aqueous polymer dispersions to prepare water-redispersible polymer powders.

14. Use of the hydrophobicizing agents according to Claims 1 to 10, where the amount of the hydrophobicizing agent added to the gypsum plaster composition is such that, based on 100 parts by weight of gypsum plaster in the hydrophobicized gypsum plaster composition, from 0.05 to 5 parts by weight of organohydropolysiloxane are present.

15. Use of the hydrophobicizing agents according to Claims 1 to 10 in gypsum mortar for troweling compounds, joint fillers, flowable screeds, jointing compositions or adhesive mortars.

16. Use of the hydrophobicizing agents according to Claims 1 to 10 in renders or stucco work.

17. Use of the hydrophobicizing agents according to Claims 1 to 10 in a gypsum plaster composition for producing plasterboard or plaster mouldings.

## Revendications

1. Agent hydrofuge pour matériaux de construction en liaison avec du plâtre, constitué d'une matière de support à base de solides organiques ou minéraux pulvérulents ayant une surface spécifique BET de > 5 m²/g, et d'un ou plusieurs organopolysiloxanes à hydrogène lié à Si, qui sont constitués de motifs de formule générale HₐSiR¹_{b}O_{(4-a-b)/2}, dans laquelle les radicaux R¹ sont des radicaux hydrocarbyle ou hydrocarbyloxy monovalents, identiques ou différents, ayant de un à 15 atomes de carbone, étant entendu qu'au moins un atome d'hydrogène lié à Si est présent par molécule, et a représente les valeurs de 0 à 3, et b représente les valeurs de 0 à 3.

2. Agent hydrofuge selon la revendication 1, **caractérisé en ce que** des matières de support organiques ou minérales pulvérulentes ayant une surface spécifique BET de 20 m²/g à 400 m²/g sont contenues.

3. Agent hydrofuge selon la revendication 1 ou 2, **caractérisé en ce que** des matières de support ayant une surface neutre à faiblement acide sont contenues.

4. Agent hydrofuge selon l'une quelconque des revendications 1 à 3, **caractérisé en ce que** du dioxyde de silicium, de l'oxyde d'aluminium, du dioxyde de titane, des silicates ou des argiles sont contenus en tant que matières de support.

5. Agent hydrofuge selon l'une quelconque des revendications 1 à 3, **caractérisé en ce que** de la poudre d'amidon, de la poudre de cellulose ou une poudre de polymère sont contenues en tant que matières de support.

6. Agent hydrofuge selon l'une quelconque des revendications 1 à 5, **caractérisé en ce que** des radicaux alkyle en C₁-C₆ et/ou des radicaux phényle non substitués sont contenus en tant que radicaux R¹.

7. Agent hydrofuge selon l'une quelconque des revendications 1 à 6, **caractérisé en ce que** a va de 0,01 à 2 et b va de 1,0 à 2,0.

8. Agent hydrofuge selon l'une quelconque des revendications 1 à 7, **caractérisé en ce que** 5 % en moles au maximum des radicaux R¹ sont des radicaux hydrocarbyloxy ou des groupes hydroxy.

9. Agent hydrofuge selon l'une quelconque des revendications 1 à 8, **caractérisé en ce que** sont contenus un ou plusieurs organohydrogénopolysiloxanes de formule générale (CH₃)₃SiO(SiHCH₃O)_{y}(Si(CH₃)₂O)ₓSi-(CH₃)₃, dans laquelle x est zéro ou un nombre entier et y est un nombre entier égal au moins à 3, et y est au moins le triple de x, et la somme de x et y est un nombre entier ayant une valeur telle que la viscosité moyenne de ces organohydrogénopolysiloxanes est au maximum de 1 000 mm²/s.

10. Agent hydrofuge selon l'une quelconque des revendications 1 à 9, **caractérisé en ce que** l'agent hydrofuge contient de 20 à 75 % en poids d'organohydrogénopolysiloxanes, par rapport au poids total de la matière de support et de l'organohydrogénopolysiloxane.

11. Procédé pour la préparation d'agents hydrofuges selon l'une quelconque des revendications 1 à 10, dans lequel l'organohydrogénopolysiloxane est utilisé sous forme de liquide, la matière de support est disposée au préalable, l'organohydrogénopolysiloxane liquide est ajouté de façon réglée, et mélangé avec la matière de support pour l'application sur la matière de support.

12. Procédé pour la préparation d'agents hydrofuges selon l'une quelconque des revendications 1 à 10, dans lequel l'application des organohydrogénopolysiloxanes sur les matières de support s'effectue par pulvérisation des organohydrogénopolysiloxanes liquides sur les matières de support pulvérulentes.

13. Procédé pour la préparation d'agents hydrofuges selon l'une quelconque des revendications 1 à 10, dans lequel l'agent hydrofuge est ajouté pendant le séchage par atomisation de dispersions aqueuses de matières plastiques, pour la fabrication de poudres de matières plastiques redispersables dans l'eau.

14. Utilisation des agents hydrofuges selon l'une quelconque des revendications 1 à 10, l'agent hydrofuge étant ajouté à la composition de plâtre en une quantité telle que de 0,05 à 5 parties en poids d'organohydrogénopolysiloxane sont présentes dans la composition hydrofugée, par rapport à 100 parties en poids de plâtre.

15. Utilisation des agents hydrofuges selon l'une quelconque des revendications 1 à 10, dans un mortier de plâtre pour des mastics, des matériaux d'étanchéité, des chapes en ciment fluides, des matériaux de jointoiement et des mortiers de colle.

16. Utilisation des agents hydrofuges selon l'une quelconque des revendications 1 à 10, dans des crépis ou des stucages.

17. Utilisation des agents hydrofuges selon l'une quelconque des revendications 1 à 10, dans une composition de plâtre pour la fabrication de plaques de plâtre ou de moules de plâtre.
